# EUROPEAN PATENT SPECIFICATION

(11) **EP 0 479 865 B1**
(45) Date of publication and mention of the grant of the patent: **22.02.1995**
(21) Application number: 90910231.1
(22) Date of filing: 05.06.1990
(51) Int. Cl.: F16K 1/22

(54) **BUTTERFLY VALVE APPARATUS AND METHOD**
DREHKLAPPENVENTILAPPARAT UND VERFAHREN
ROBINET PAPILLON APPAREIL ET METHODE

(30) Priority: 30.06.1989 US 374897; 17.08.1989 US 395234; 16.10.1989 US 422354
(43) Date of publication of application: 15.04.1992
(73) Proprietor: AlliedSignal Inc., Morristown, New Jersey 07962-2245 (US)
(72) Inventor: BALL, Larry, K., Chandler, AZ 85226 (US); HINES, Marshall, U., Scottsdale, AZ 85254 (US)
(74) Representative: Brock, Peter William
(86) International application number: US9003180
(87) International publication number: WO9100450

(56) References cited:
- EP-A- 0 320 491
- FR-A- 2 311 972
- US-A- 3 591 127

## Description

The present invention relates generally to valve apparatus and methods. More particularly, the present invention relates to butterfly valve apparatus and methods wherein a duct defines a flow path for conveying a flow of fluid. A plate-like valve member is pivotally disposed in the duct about a transverse axis, and is conformal at its outer periphery to the internal wall shape of the duct. The valve member is pivotal between a first position transverse to the flow path and substantially sealingly engaging the duct wall to close fluid flow therein, and a second position spanning the flow path generally parallel therewith to allow and control the fluid flow therein.

A conventional butterfly valve is set forth by US-A-3 971 414, which discusses the general state of the butterfly valve art prior to the invention by Illing. According to the teaching of US-A-3 971 414, the actuating torque required to rotate the valve member of a butterfly valve from its closed position to an open position may be reduced by utilizing an articulated valve member. That is, the plate-like butterfly valve member includes a leading wing and a trailing wing with respect to fluid flow. The leading wing is defined in part by a servo tab or spoiler tab which is carried by and pivotally movable relative to the remainder of the valve member. Pivoting the spoiler tab ahead of the valve member in the opening direction so as to point into the fluid flow, changes the angulation and effective movement arm of the fluid pressure and flow forces on the spoiler tab, with the intention of reducing the total torque opposing opening of the valve member in comparison to previously known butterfly valves. The articulation of the spoiler tab is such that it pivots from an aligned position to move ahead of the valve member during most of the pivotal movement of the latter in the opening direction. During the last portion of the pivotal movement of the valve member to its fully open position, the servo tab reverses its relative pivotal movement and returns to an aligned position achieved when the valve member is fully open. In this way, the valve member and servo tab align with one another and with the fluid flow in the fully open position of the valve member.

A reduction in the operating torque required to move the valve member from its closed to its open position, such as assertedly achieved by the invention of Illing, has been a long-recognized need in the field of butterfly valves. Unfortunately, the invention set forth in US-A-3 971 414 does not fully comprehend the usual design requirements for a butterfly valve, and has not enjoyed commercial acceptance, to the Applicants' knowledge.

It will be understood by those skilled in the pertinent art that the valve member of a conventional butterfly valve must ordinarily achieve a sealing tight fit with the walls of the duct. Ordinarily the plate-like butterfly valve member carries a seal member at the outer periphery thereof. This seal member, for example, a piston ring type, o-ring, or lip seal, is resiliently and sealingly engageable with the duct wall in the closed position of the valve member. Thus, it is conventional for the plate-like valve member to be circumferentially continuous, and to be skewed slightly relative to the pivot shaft supporting the valve member. That is, the periphery of the valve member is disposed upstream of the shaft on one side and down stream of the shaft on the other to allow use of a circumferentially continuous sealing member at the periphery of the valve member. The pivot shaft may transect the duct perpendicularly to the flow path, or be angulated relative to the latter. The valve taught by US-A-3 971 414 does not permit use of a circumferentially continuous sealing member on the valve member periphery.

EP-A-0 320 491 discloses a plate-type valve in which the valve member is moved linearly in a direction perpendicular to itself in order to effect seating or unseating of the valve member. The patent is not particularly instructive on the point of minimizing the opposing torque exerted by fluid on the valve member.

In view of the deficiencies of the known butterfly valve art it is an object for this invention to reduce or eliminate the opposing torque which must be overcome to move the valve member of a butterfly valve from its closed to its open position.

Desirably, fluid pressure and flow forces acting on the plate-like butterfly valve member may be used to reduce or eliminate the opposing torque, or to effect pivotal movement of the valve member.

Still further, in view of the deficiencies of the valve taught in US-A-3971414, it is desirable to be able to use a circumferentially continuous sealing member on the butterfly valve member.

The present invention provides a butterfly valve apparatus having a duct, a plate-like butterfly valve member pivotally disposed in said duct and carried by a shaft member journaled on the duct and extending externally thereof to receive valve actuating torque,
characterized in that the apparatus further comprises translating means, responsive to rotational movement of said shaft, for moving said valve member such that the latter moves translationally relative to said shaft along an action line generally parallel to said valve member and perpendicular to said shaft; and enveloping said shaft member to trap the latter in proximity to said valve member while also accommodating said translational movement.

The present invention also provides a butterfly valve apparatus having a duct, a plate-like butterfly valve member pivotally disposed in said duct for movement between a first transverse position closing the duct and a second relatively angulated position allowing fluid flow in said duct, a shaft member journaled on the duct and extending externally thereof for rotatably receiving an actuating torque,
characterized in that the apparatus further comprises kinematic means interconnecting said valve member and shaft for moving the former in response to rotation of the latter such that the former moves translationally relative to the latter along an action line substantially parallel to the former when the former is at said relatively angulated position.

An advantage of the present invention is that it allows use of a circumferentially continuous sealing member on the plate-like valve member of the butterfly valve.
FIG. 1 provides a schematic longitudinal cross-sectional view of a butterfly valve according to one embodiment of the invention; and taken along line 1-1 of FIG. 2;
FIG. 2 depicts a transverse cross-sectional view of the butterfly valve of FIG. 1, and taken along line 2-2 of this latter Figure;
FIG. 3 provides a longitudinal cross-sectional view similar to FIG. 1, and showing parts of the butterfly valve in alternative operative positions;
FIG. 4 provides a schematic longitudinal cross-sectional view similar to FIG. 1, but depicting an alternative embodiment of the invention;
FIG. 5 depicts a transverse cross-sectional view similar to FIG. 2, and depicting the embodiment of FIG. 4 taken along the line 5-5 of this latter Figure; and
FIG. 6 provides a longitudinal cross-sectional view of the embodiment of FIG. 4 with parts thereof in alternative operative positions.

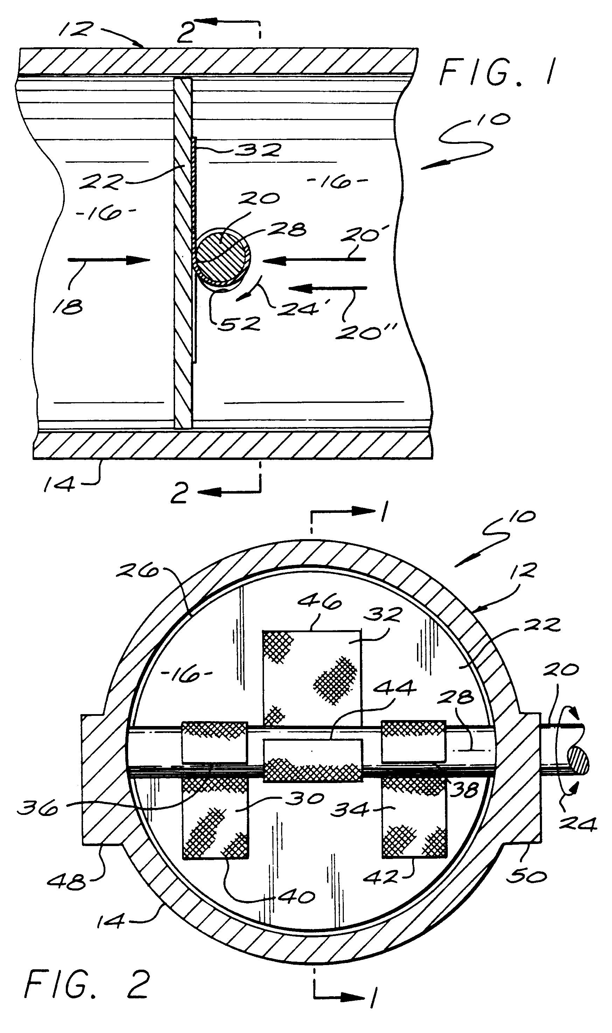

Viewing FIGS. 1 and 2 in conjunction, it will be seen that a butterfly valve apparatus 10 according to the present invention includes a duct 12 having an elongate circumferentially extending wall 14. The wall 14 bounds a flow path 16 wherein a flow of fluid, represented by arrow 18, is conveyed. A shaft 20 transects the duct 12 and supports therein a plate-like butterfly valve member 22. Shaft 20 and valve member 22 are intersecured for pivotal movement in unison. The shaft 20 is pivotally journaled by and is laterally movable relative to the duct 12, as will be more fully explained below. Shaft 20 also extends outwardly of the duct 12 to receive an actuating torque, generally represented by the arrow 24.

In a first, or closed, position of the plate-like valve member 22, the latter spans and closes the flow path 16, as is depicted in Figures 1 and 2. It will be noted that the plate-like valve member 22 provides a circumferentially continuous outer peripheral surface 26. This peripheral surface 26 in the first position of the valve member 22 cooperates with the wall 14 to substantially sealingly close fluid flow in flow path 16. Alternatively, the valve member 22 may carry a circumferentially extending sealing member at the surface 26 to sealingly cooperate with wall 14. These sealing members conventionally are of piston ring, o-ring, or lip seal configuration, as is well known to those skilled in the butterfly valve art.

It will be noted that in the first position of the plate-like valve member, the shaft 20 is centered in the duct 12. That is, the shaft centrally transects the flow path 16 so that an equal area of plate 22 is disposed on each side of the shaft 20 (above and below shaft 20, viewing FIG. 1). It is easily appreciated that in the closed position of the valve 22, static fluid pressure forces acting thereon are balanced at a medial line of support 28, defined at the supporting engagement between plate 22 and shaft 20. Thus, the fluid pressure forces acting on plate 22 may be considered to act at the center of the plate along the line of arrow 18. To support these fluid pressure forces, the shaft 20 provides a supporting force, which is represented by arrow 20', aligned with and opposite the arrow 18, and acting through the medial support line 28.

Viewing FIG. 2, it will be seen further that the plate 22 and shaft 20 are movably secured together by three lengths 30, 32, and 34, of flexible webbing. Two of the lengths of webbing 30 and 34, are secured at their one respective end, 36, 38, to the shaft 20 and wrap partially around the latter in a first direction between the shaft 20 and plate 22 to extend along the adjacent face of the latter. These lengths of webbing 30, 34 are secured to the plate 22 at their opposite ends 40, 42. On the other hand, the third length of webbing 32 is interposed between the lengths 30 and 34 and is secured to shaft 22 at its one end 44. The webbing 32 wraps around shaft 20 in a direction opposite to webs 30, 34, to pass between the shaft and plate 22, and extend along the adjacent face of the latter. At its end 46 the web 32 is secured to plate 22.

Further to the above, FIGS 1 and 2 reveal that the wall 14 of duct 12 defines a pair of laterally elongate bosses 48, 50 whereat the shaft 20 is pivotally supported by the wall 14, viewing FIG. 2 particularly. The bosses 48, 50 each define one of a pair of transversely elongate slots 52, only one of which is visible viewing FIG. 1. The shaft 20 is sealingly received in the slots 52 for both pivotal and lateral translational movement relative to the duct 12.

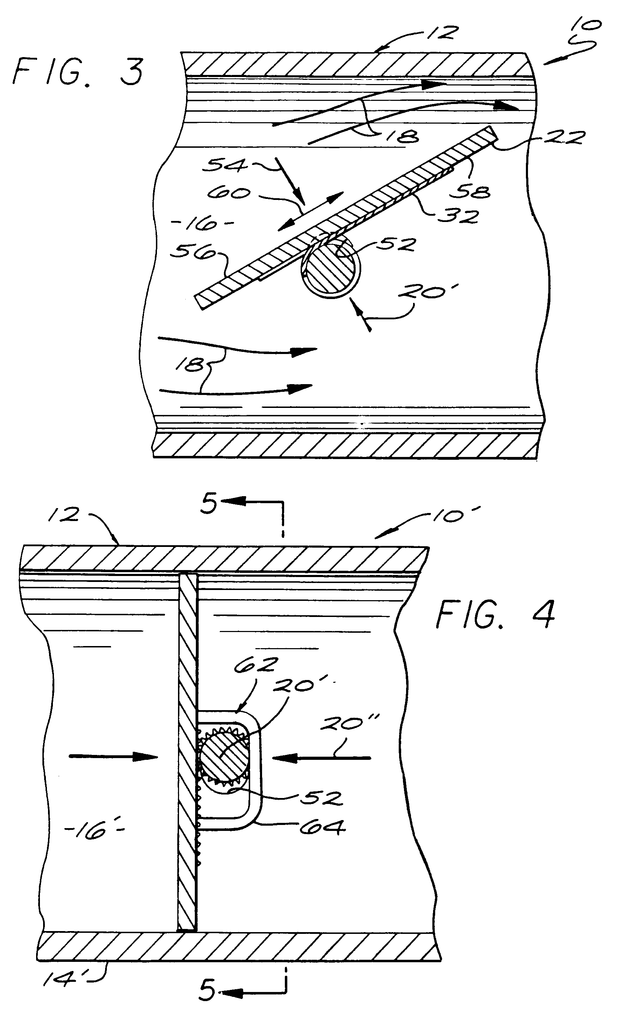

In order to effect opening pivotal movement of the plate member 22, a clockwise actuating torque is applied to shaft 20, viewing FIG. 1, arrow 24'. This opening torque rolls the shaft 20 downwardly relative to plate 22, wrapping up the webs 30 and 34, while unwrapping web 32. Consequently, the shaft 20 moves downwardly in slots 52 so that the shaft and its supporting force arrow 20' no longer align with the medial line 28 and fluid pressure forces resolved at arrow 18. That is, the shaft 20 and its supporting force move downwardly relative to the plate 22 to an off-center position at the alignment of arrow 20''. The fluid pressure forces acting on plate 22 result in a clockwise torque which pivots plate 22 toward the position thereof depicted in FIG. 3.

As seen in FIG. 3, the plate-like valve member 22 is angularly disposed within the flow path 16 to allow fluid flow therein, as depicted by arrows 18. In overview, the angular position of the valve member 22 relative to the duct 12 and direction of fluid flow therein is selected by pivotal movement of the shaft 20 effected by actuating torque 24. At each pivotal position of the valve member 22, fluid dynamic flow forces acting thereon result in a force, represented by arrow 54, acting transversely thereto. The shaft 20 provides a support force, depicted by arrow 20', opposite to the force 54. The alignment of these forces relative to the slots 52 ensures that the shaft 20 remains in its lower, off-center, position. The angular position of the plate-like valve member 22 is determined by necessary alignment of the fluid dynamic flow forces (arrow 54) with the support force (arrow 20'). It is easily seen that arrow 54 is displaced from the medial line 28 of valve member 22 toward an upstream or leading wing 56 thereof, and away from a trolling or downstream wing 58. The position of the resultant force 54 changes with changing angular position of the valve member 22 in duct 12, but in every case the resultant force and support force must be aligned. Any misalignment of those forces causes the valve member 22 to seek a new angular position. Also, translation of the member 22 relative to shaft 20, which is depicted by arrow 60, may be effected either by rotation of the shaft 20, or by rocking of the valve member 22 about shaft 20 while the latter is stationary.

Carefully viewing FIG. 3, and recalling the wrapped relation of the webs 30-34 with shaft 20, it can be seen that clockwise rotation of the shaft 20, for example, translates valve member 22 rightwardly to misalign forces 54 and 20'. That is, force 54 is shifted generally to the right of force 20', and provides a clockwise torque to valve member 22 at the same time the size of wing 56 is decreased and wing 58 is increased. Thus, the valve member 22 pivots clockwise in response to the fluid dynamic forces to seek a new position once again aligning force 54 with support force 20'. Each angular position of the valve member 22 is determined by a rotational position of shaft 20, and is stable. For example, viewing FIG. 3, and considering shaft 20 as stationary, if the valve member 22 is perturbed clockwise toward a more open angular position, this movement rocks the plate-like valve member about shaft 20 to increase the size of leading wing 56 and decrease the size of wing 58. Consequently, the resulting fluid dynamic forces, arrow 54, are shifted leftwardly to result in a restoring moment on the valve member 22. Tests of a valve device embodying the invention as depicted in FIG. 1 have shown the angular position of the valve member to be related to pivotal position of shaft 20, to be stable, and to be almost completely free of rocking oscillation of plate member 22 about the shaft 20.

In order to close the valve device 10, shaft 20 is rotated counter clockwise from the position of FIG. 3 to progressively move the valve member 22 toward its position of FIG. 1. As the valve member 22 approaches its closed position, it contacts the wall 14 of the duct 12 so that further counter clockwise rotation of the shaft 20 rolls the shaft upwardly along the valve member 22. That is, the shaft 20 rolls along the valve member 22 to move upwardly in the slots 52 toward the position depicted in FIG. 1. Once again, the balanced static fluid pressure forces acting on the valve member 22, ensure its stable closed position transverse to duct 12, as depicted in FIG. 1.

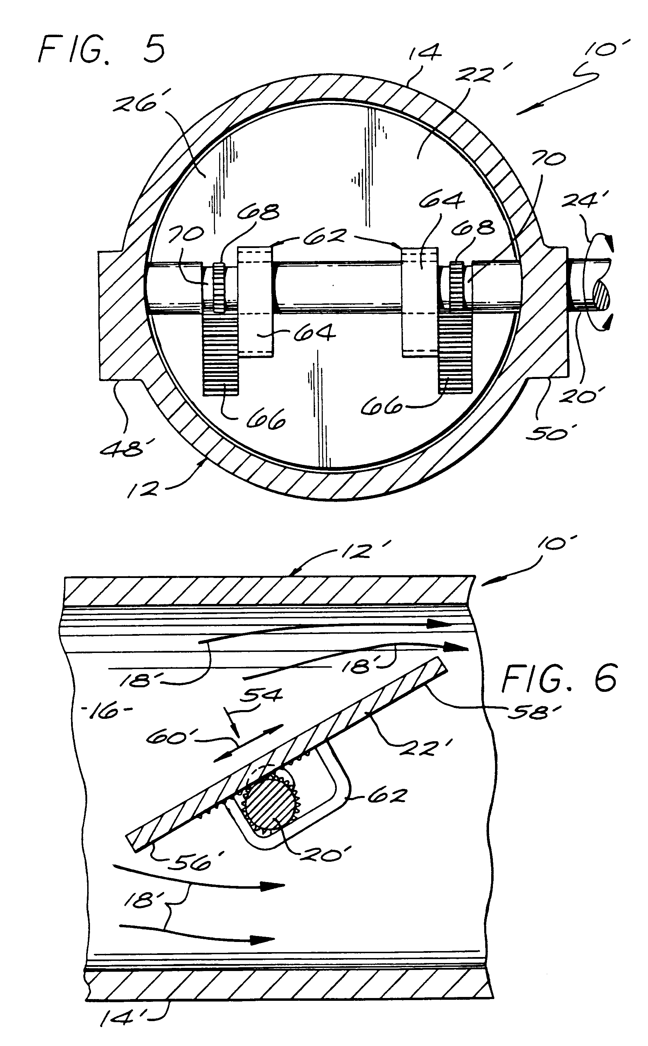

Turning now to FIGS 4-6, an alternative embodiment of the invention is depicted. In order to obtain reference numerals for use on these drawing Figures, features which are analogous in structure or function to that depicted in FIGS 1-3 are referenced with the same numeral used previously, but with a prime added. FIGS. 4-6 depict an alternative embodiment of the invention wherein the flexible webs 30-34 have been replaced by a pair of "rack-and-pinion with translating retainer" mechanisms, which are each generally referenced with the numeral 62.

The retainer portion of the mechanisms 62 includes a stirrup or bracket member 64 which is U-shaped and is secured at each of its ends to the valve member 22'. The two brackets 64 encompass the shaft 20' to trap the latter in close proximity with the valve plate 22', while allowing relative translational movement therebetween. The valve plate 22' similarly carries or defines a pair of spaced apart gear racks 66. Meshing with the gear racks 66 are respective pinion gear members 68 carried by the shaft 20' within respective reduced-diameter shaft portions 70. The gear racks 66 are arranged so that the pitch line of the gear teeth is at the face of valve member 22' adjacent shaft 20'. Similarly, the pitch circle of the pinions 68 is at the outer diameter of shaft 20'. The resulting mesh of the gear racks 66 with pinion gears 68 allows rocking motion of valve member 22' about shaft 20' completely without slippage and substantially without friction. The bracket members 64 embrace the shaft 20' to ensure retention of the mesh relationship between the gear elements 66, 68. Also the provision of a pair of the mechanisms 62 spaced apart on the plate 22' and shaft 20' promotes precise guiding of the plate member 22' within duct 12'.

Functioning of the embodiment depicted in FIGS. 4-6 is the same as that of FIGS. 1-3. In other words, the wrapped flexure members 30-34 of FIGS 1-3 on the one hand provide translation of the valve plate 22 in response to rotating of shaft 20 with angulation of the valve plate held constant; and on the other hand also provide translation of the valve plate in response to rocking thereof about the shaft 20, with the rotational position of the shaft held constant. The "rack-and-pinion with translating retainer" mechanisms 62 of FIGS. 4-6 provide precisely the same kinematic relationship between valve plate 22' and shaft 20', while avoiding flexure of structural elements. That is, flexible web material is not required by the embodiment of FIGS 4-6. Also, the rack and pinion mechanisms of FIGS. 4-6 may provide a more precise and rigid guiding of the valve plate 22' relative to shaft 20' and duct 12'.

A significant feature of the present invention resides in the disassociation of fluid dynamic torques from acting on shaft 20. That is, an actuator provided to pivot shaft 20 need not sustain or overcome the fluid dynamic flow forces on the valve member and conventionally creating a strong closing torque. With the present invention, the actuator need only provide sufficient torque to translate the valve member 22 relative to shaft 20. In response, the fluid dynamic flow forces on the valve member 22 cause it to seek a new angular position aligning these flow forces, as resolved, with the support force of shaft 20. The necessary torque to translate valve member 22 relative to shaft 20 is but a small fraction of the torque required to actuate a conventional butterfly valve.

## Claims

1. A butterfly valve apparatus (10) having a duct (12), a plate-like butterfly valve member (22) pivotally disposed in said duct and carried by a shaft member (20) journaled on the duct and extending externally thereof to receive valve actuating torque,
characterized in that the apparatus further comprises translating means (30, 32, 34; 62, 64, 66, 68), responsive to rotational movement of said shaft member (20), for moving said valve member (22) such that the latter moves translationally relative to said shaft member (20) along an action line generally parallel to said valve member (22) and perpendicular to said shaft member (20) and enveloping said shaft member (20) to trap the latter in proximity to said valve member (22) while also accommodating said translational movement.

2. The butterfly valve apparatus of Claim 1 wherein said shaft member (20) is movable laterally of said duct (12) along a path generally perpendicular to said shaft between a first position wherein said shaft substantially bisects said duct and a second position spaced from said first position.

3. The butterfly valve apparatus of Claim 1 wherein said translating means includes an elongate flexible member (32) secured at one end (46) thereof to said valve member (22), at least partially encircling said shaft member (20), and secured at an opposite end (44) to said shaft member.

4. The butterfly valve apparatus of Claim 3 wherein said translating means includes a second flexible elongate member (30) secured at one respective end (40) thereof to said valve member (22), at least partially encircling said shaft member (20) in a direction opposite said elongate flexible member (32), and secured at an opposite end (36) to said shaft member.

5. The butterfly valve apparatus of Claim 4 wherein said flexible members are interposed between said valve member (22) and said shaft member (20).

6. The butterfly valve apparatus of Claim 1 wherein a unidirectional flow of fluid is received in said duct (12), said platelike valve member (22) being disposed generally upstream from said shaft member.

7. The butterfly valve apparatus of Claim 1 wherein said moving means includes said shaft member (20) carrying a pinion gear (68), and said valve member (22) carrying a rack gear (66) meshing with said pinion gear, and said translation means includes a retaining member (62) having two opposite ends rigidly secured to said valve member (22).

8. The butterfly valve apparatus of Claim 7 wherein said retaining member (62) is a U-shaped member.

9. A butterfly valve apparatus including a duct (12), a plate-like butterfly valve member (22) pivotally disposed in said duct for movement between a first transverse position closing the duct and a second relatively angulated position allowing fluid flow in said duct, a shaft member (20) journaled on the duct and extending externally thereof for rotatably receiving an actuating torque,
characterized in that the apparatus further comprises kinematic means (30,32,34,64,66,68) interconnecting said valve member and shaft for moving the former in response to rotation of the latter such that the former moves translationally relative to the latter along an action line substantially parallel to the former when the former is at said relatively angulated position.

## Patentansprüche

1. Drehklappenventilapparat (10) mit einer Leitung (12), einem plattenartigen Drehklappen-Ventilelement (22), das schwenkbar in der Leitung angeordnet und von einem Wellenelement (20) getragen ist, das an der Leitung drehgelagert ist und sich davon nach außen hin erstreckt, um ein Betätigungsdrehmoment aufzunehmen,
dadurch gekennzeichnet, daß der Apparat ferner eine auf eine Drehbewegung des Wellenelementes (20) ansprechende Verschiebeeinrichtung (30,32,34;62,64,66,68) zum derartigen Bewegen des Ventilelementes (22) umfaßt, daß sich das letztere translatorisch relativ zum Wellenelement (20) entlang einer zum Ventilelement (22) im wesentlichen parallelen und zum Wellenelement (20) senkrechten Betätigungslinie bewegt, und die das Wellenelement (20) derart umgibt, daß das letztere nahe dem Ventilelement (22) gefangen ist, während auch die translatorische Bewegung untergebracht wird.

2. Drehklappenventilapparat nach Anspruch 1, bei dem das Wellenelement (20) seitlich zur Leitung (12) entlang eines Weges bewegbar ist, der im wesentlichen senkrecht zur Welle zwischen einer ersten Position verläuft, in der die Welle die Leitung im wesentlichen in zwei Teile teilt, und einer zweiten, von der ersten Position in einem Abstande liegenden Position.

3. Drehklappenventilapparat nach Anspruch 1, bei dem die Verschiebeeinrichtung ein längliches, biegsames Element (32) umfaßt, das mit seinem einen Ende (46) am Ventilelement (22) befestigt ist und das Wellenelement (20) zumindest teilweise umkreist, und das mit dem gegenüberliegenden Ende (44) am Wellenelement befestigt ist.

4. Drehklappenventilapparat nach Anspruch 3, bei dem die Verschiebeeinrichtung ein zweites biegsames, längliches Element (30) aufweist, das jeweils mit seinem einen Ende (40) am Ventilelement (22) befestigt ist und das Wellenelement (20) in einer zum länglichen, biegsamen Element (32) entgegengesetzten Richtung zumindest teilweise umkreist, und das mit dem entgegengesetzten Ende (36) am Wellenelement befestigt ist.

5. Drehklappenventilapparat nach Anspruch 4, bei dem die biegsamen Elemente zwischen das Ventilelement (22) und das Wellenelement (20) zwischengeschaltet sind.

6. Drehklappenventilapparat nach Anspruch 1, bei dem in der Leitung (12) ein in einer Richtung strömendes Fluid aufgenommen wird, wobei das plattenartige Ventilelement (22) im wesentlichen stromaufwärts des Wellenelementes angeordnet ist.

7. Drehklappenventilapparat nach Anspruch 1, bei dem die Bewegungseinrichtung das ein Ritzel (68) tragende Wellenelement (20) aufweist und das Ventilelement (22) eine mit dem Ritzel kämmende Zahnstange (66) trägt, und die Verschiebeeinrichtung ein Halteglied (62) mit zwei einander gegenüberliegenden, am Ventilelement (22) starr befestigten Enden umfaßt.

8. Drehklappenventilapparat nach Anspruch 7, bei dem das Halteglied (62) ein U-förmiges Element ist.

9. Drehklappenventilapparat mit einer Leitung (12), einem plattenartigen, schwenkbar in der Leitung gelagerten Drehklappen-Ventilelement (22), das für eine Bewegung zwischen einer ersten querliegenden, die Leitung verschließenden Position und einer zweiten, relativ angewinkelten, den Fluidfluß in der Leitung zulassenden Position, angeordnet ist, einem Wellenelement (20), das an der Leitung drehgelagert ist, und sich aus dieser zum drehbaren Aufnehmen eines Betätigungsdrehmomentes erstreckt,
dadurch gekennzeichnet, daß der Apparat des weiteren eine das Ventilelement und die Welle miteinander verbindende kinematische Einrichtung (30,32,34,64,66,68) zum derartigen Bewegen des ersteren auf Grund einer Drehung des letzteren umfaßt, daß sich das erstere translatorisch relativ zum letzteren entlang einer Betätigungslinie bewegt, die im wesentlichen parallel zum ersteren liegt, wenn sich das erstere an der relativ angewinkelten Lage befindet.

## Revendications

1. Appareil (10) à valve papillon, comportant un conduit (12), un élément (22) de valve papillon en forme de plaque disposé pivotant dans ledit conduit et porté par un élément d'arbre (20) monté par palier dans le conduit et s'étendant vers son extérieur pour recevoir un couple d'actionnement de valve,
caractérisé en ce que l'appareil comporte de plus des moyens de translation (30, 32, 34 ; 62, 64, 66, 68) sensibles au mouvement de rotation dudit élément d'arbre (20), pour déplacer ledit élément de valve (22) de sorte que ce dernier se déplace en translation par rapport audit élément d'arbre (20) le long d'une ligne d'action généralement parallèle audit élément de valve (22) et perpendiculaire audit élément d'arbre (20), et
enveloppant ledit élément d'arbre (20) pour enfermer ce dernier à proximité dudit élément de valve (22) tout en permettant aussi ledit mouvement de translation.

2. Appareil à valve papillon de la revendication 1 dans lequel ledit élément d'arbre (20) est mobile latéralement sur ledit conduit (12) le long d'un chemin généralement perpendiculaire audit arbre entre une première position dans laquelle ledit arbre coupe pratiquement ledit conduit et une seconde position espacée de ladite première position.

3. Appareil à valve papillon de la figure 1 dans lequel lesdits moyens de translation comportent un élément flexible allongé (32) fixé par une extrémité (46) audit élément de valve (22), entourant au moins partiellement ledit élément d'arbre (20), et fixé par une extrémité opposé (44) audit élément d'arbre.

4. Appareil à valve papillon de la revendication 3, dans lequel lesdits moyens de translation comportent un second élément allongé flexible (30) fixé à une extrémité respective (40) audit élément de valve (22), entourant au moins partiellement ledit élément d'arbre dans un sens opposé audit élément flexible allongé (32), et fixé par une extrémité opposée (36) audit élément d'arbre.

5. Appareil à valve papillon de la revendication 4 dans lequel lesdits éléments flexibles sont interposés entre ledit élément de valve (22) et ledit élément d'arbre (20).

6. Appareil à valve papillon de la revendication 1, dans lequel un flux unidirectionnel de fluide est reçu dans ledit conduit (12), ledit élément de valve (22) en forme de plaque étant disposé généralement en aval dudit élément d'arbre.

7. Appareil à valve papillon de la revendication 1, dans lequel lesdits moyens de déplacement comportent ledit élément d'arbre (20), portant un pignon denté (32, 68), et ledit élément de valve (22) portant une crémaillère dentée (66) engrenée avec ledit pignon denté, et lesdits moyens de translation comportent un élément de retenue (62) ayant deux extrémités opposées fixées de manière rigide audit élément de valve (22).

8. Appareil à valve papillon selon la revendication 7, dans lequel ledit élément de retenue (62) est un élément en forme de "U".

9. Appareil à valve papillon comportant un conduit (12), un élément de valve (22) papillon en forme de plaque disposé de manière pivotante dans ledit conduit pour un mouvement entre une première position transversale fermant le conduit et une seconde position relativement inclinée autorisant un flux de fluide dans ledit conduit, un élément d'arbre (20) monté par palier sur le conduit et s'étendant vers son extérieur pour recevoir de manière tournante un couple d'actionnement,
caractérisé en ce que l'appareil comporte de plus des moyens cinématiques (30, 32, 34, 64, 66, 68) interconnectant ledit élément de valve et ledit arbre pour déplacer le premier en réponse à la rotation du dernier de telle sorte que le premier se déplace en translation par rapport au dernier le long d'une ligne d'action pratiquement parallèle au premier, quand le premier est dans ladite position relativement inclinée.
